# FASCICULE DE BREVET EUROPEEN

(11) **EP 2 593 331 B1**
(45) Date de publication et mention de la délivrance du brevet: **02.09.2015**
(21) Numéro de dépôt: 11746271.3
(22) Date de dépôt: 07.07.2011
(51) Int. Cl.: B60N 2/24, B60N 2/30

(54) **VEHICULE COMPRENANT UN SIEGE ESCAMOTABLE EN DEUX TEMPS**
FAHRZEUG MIT EINEM ZWEISTUFIGEN KLAPPSITZ
VEHICLE INCLUDING A SEAT THAT IS FOLDABLE IN TWO STAGES

(30) Priorité: 12.07.2010 FR 1055675
(43) Date de publication de la demande: 22.05.2013
(73) Titulaire: Peugeot Citroën Automobiles SA, 78140 Vélizy Villacoublay (FR)
(72) Inventeur: DUTOT, Christophe, F-94400 Vitry Sur Seine (FR); PEYLABOUD, Patrick, F-78610 Le Perray En Yvelines (FR)
(86) Numéro de dépôt international: PCT/FR2011/051619
(87) Numéro de publication internationale: WO 2012/007676

(56) Documents cités:
- WO-A1-2008/015527
- WO-A2-2010/001052
- DE-A1- 10 318 718
- FR-A1- 2 851 211
- GB-A- 2 374 001

## Description

L'invention concerne le domaine des véhicules intégrant au moins un siège escamotable. Le siège est rendu escamotable pour gagner de la place, de l'espace disponible, lorsqu'il n'y a pas d'occupant assis dedans et que cette place ou cet espace libérés vont devenir utiles à d'autres fins, notamment comme espace de chargement, par exemple dans un véhicule utilitaire. Selon l'art antérieur, il est connu des sièges escamotables, dossier comme assise.

Cependant, selon l'invention, il a été constaté que ces sièges escamotables de l'art antérieur ne réalisent pas un bon compromis entre la modularité du véhicule et le confort offert aux occupants du véhicule lorsque l'un ou plusieurs des sièges escamotables sont effectivement escamotés.

L'invention cherche à optimiser à la fois la souplesse de la modularité du siège escamotable d'une part et la simplicité comme l'ergonomie des opérations d'escamotage à réaliser par l'utilisateur du véhicule d'autre part.

Pour cela, l'invention se propose d'offrir à la fois une position d'escamotage complet du siège passager latéral avec un confort réduit par rapport à la position normale d'utilisation avec occupant assis dans ledit siège, pour les autres occupants, et une position d'escamotage partiel du siège passager latéral avec un confort moins réduit, par rapport à la position normale d'utilisation avec occupant assis dans ledit siège, pour les autres occupants, le tout avec un minimum d'opérations d'escamotage, par exemple seulement deux opérations d'escamotage, ou seulement deux temps d'escamotage, la position obtenue entre les deux temps étant alors une position stable.

Les opérations d'escamotage sont de préférence réalisées manuellement par l'utilisateur du véhicule, ce qui est plus simple et plus robuste qu'un escamotage automatique. La simplicité et l'ergonomie des opérations d'escamotage sont, du point de vue de la qualité perçue par l'utilisateur du véhicule, notablement plus critiques lorsque l'escamotage est manuel que lorsque l'escamotage est automatique par exemple à l'aide d'un moteur électrique.

La position d'escamotage complet du siège passager latéral offre un espace libéré dans le véhicule, notamment pour y disposer des charges plus ou moins encombrantes, plus vaste que la position d'escamotage partiel du siège passager latéral. L'escamotage du siège, complet ou partiel, permet par exemple dans un véhicule utilitaire, de prolonger, respectivement plus ou moins, le plancher de chargement arrière situé derrière la rangée de sièges du poste de conduite situé à l'avant du véhicule.

Le confort réduit est un confort réduit par rapport à la position normale d'utilisation avec occupant assis dans ledit siège, pour les autres occupants, notamment en termes de gêne de mouvement et de perte de visibilité notables pour les autres occupants d'une même rangée de sièges, par exemple notamment en termes de gêne de mouvement notable pour le passager central et perte de visibilité notable à la fois pour le conducteur et le passager central dans le cas d'une rangée de trois sièges.

Le confort moins réduit est un confort moins réduit que le confort réduit, par rapport à la position normale d'utilisation avec occupant dudit siège, pour les autres occupants, notamment en termes de gêne de mouvement et de perte de visibilité notables modérées pour les autres occupants d'une même rangée de sièges, par exemple notamment en termes de gêne de mouvement modérée pour le passager central et perte de visibilité modérée à la fois pour le conducteur et le passager central dans le cas d'une rangée de trois sièges.

On connaît, notamment du document WO-A-2008/015527 une cinématique conforme au préambule de la revendication 1. Cette cinématique est particulièrement complexe à mettre en oeuvre.

Selon l'invention il est prévu un véhicule comprenant un siège escamotable conforme à la partie caractérisante de la revendication 1 dont la cinématique par bielles est à la fois particulièrement simple et robuste.

L'escamotage du dossier de siège vers le haut est préférentiellement réalisé par un mouvement de translation curviligne par rapport à la structure du véhicule. La structure du véhicule est toute partie du véhicule fixe et immobile par rapport au plancher du véhicule et par rapport à la majeure partie de la carrosserie du véhicule qui est fixe par rapport au plancher.

Chaque bielle est préférentiellement une barre sensiblement rectiligne, dont les deux extrémités présentent chacune un degré de liberté en rotation respectivement par rapport aux parties de véhicule auxquelles ces extrémités de bielle se rattachent.

Avantageusement, la bielle supérieure est rattachée au haut de dossier et la bielle inférieure est rattachée en zone basse de dossier. Ainsi, les deux bielles sont très écartées l'une de l'autre, ce qui leur confère une meilleure résistance mécanique lorsqu'elles subissent l'effort de portage du siège qui est alors en porte à faux.

Avantageusement, la bielle inférieure est rattachée à l'articulation entre le dossier et l'assise. C'est une façon simple et efficace de désynchroniser l'escamotage de l'assise de l'escamotage du dossier. Elle n'était pas évidente à choisir, car cette articulation étant déjà chargée, l'assise et le soubassement peuvent pivoter par rapport au dossier par son intermédiaire, il n'était donc pas évident d'y rattacher justement l'extrémité de l'une des bielles portant le dossier par rapport à la structure du véhicule.

De préférence, le siège escamotable appartient à une rangée de trois sièges disposés l'un à côté de l'autre. Une rangée de trois sièges dans l'habitacle d'un véhicule qui reste de taille raisonnable n'offre qu'une place limitée à chacun des occupants de ces trois sièges. Il est donc particulièrement intéressant d'offrir une position d'escamotage partiel qui gêne moins que l'escamotage complet le mouvement ou le confort des autres passagers. Préférentiellement, seul le siège passager latéral de la rangée est escamotable.

De préférence, le véhicule est un véhicule utilitaire avec un plancher de chargement situé derrière le poste de conduite comprenant les sièges du véhicule. L'invention est particulièrement intéressante pour un véhicule utilitaire, car elle permet de prolonger vers l'avant, de manière simple et efficace, le plancher de chargement arrière pour des objets dont la longueur est encombrante, comme les tuyaux ou les échelles, et également pour des objets dont la longueur et la hauteur seront encombrants, par exemple beaucoup de tuyaux ou une grosse échelle. Préférentiellement, le niveau du plancher de chargement derrière le poste de conduite est inférieur ou égal au niveau du plancher dans le poste de conduite.

De préférence, le soubassement comprend plusieurs pieds. L'invention est alors particulièrement intéressante, car elle offre, en une seule opération d'escamotage, simultanément à l'escamotage de l'assise contre le dossier, l'escamotage de ces différends pieds, qu'il aurait sinon fallu replier indépendamment en une ou plusieurs opérations supplémentaires d'escamotage, de surcroît réalisées à la main par l'utilisateur dans le cas d'un système d'escamotage manuel.

Avantageusement, chaque pied a son extrémité basse qui peut être verrouillée dans le plancher du véhicule. La stabilité du siège, en position normale d'utilisation avec un occupant assis dedans, est ainsi directement assurée, sans besoin d'un système annexe ou de renforts supplémentaires. Préférentiellement, au moins un, et de préférence au moins deux pieds sont situés en zone avant de l'assise. Préférentiellement, le siège escamotable ne comprend que deux pieds situés en zone avant de l'assise. La zone avant signifie que même si le pied n'est pas complètement à l'avant de l'assise, il est en tous cas plus à l'avant qu'à l'arrière de l'assise.

Avantageusement, le soubassement ne comprend que deux pieds qui sont deux pieds latéraux situés en zone avant de l'assise, de chaque côté de l'assise. Le soubassement ne comprend alors pas d'autres pieds, mais il peut comprendre d'autres éléments. Cette configuration réalise un bon compromis entre simplicité du soubassement et robustesse du soubassement dans la position normale d'utilisation du siège. Avantageusement, le soubassement comprend aussi au moins une barre reliant la zone basse de dossier à une partie non extrême d'un pied du soubassement situé en zone avant de l'assise, la barre pouvant pivoter à ses deux extrémités. Cette barre est une solution très simple pour rendre simultanés les escamotages, du soubassement contre l'assise d'une part et de l'assise contre le dossier d'autre part. La barre est articulée à ses deux extrémités, de préférence par des liaisons pivot dont les axes de rotation sont parallèles entre eux. Avantageusement, l'axe de pivotement de la barre en zone basse de dossier est distinct de l'axe de pivotement de l'articulation de l'assise par rapport au dossier. Ainsi, la barre peut être réalisée avec peu de matière ou un matériau relativement peu solide intrinsèquement, par exemple en plastique et non pas en métal, car elle support moins d'effort dans ce cas que dans le cas où l'axe de pivotement de la barre en zone basse de dossier serait confondu avec l'axe de pivotement de l'articulation de l'assise par rapport au dossier. Préférentiellement, ladite partie non extrême du pied avant est sensiblement le milieu du pied avant, situé entre 40 et 60% de la hauteur de soubassement.

Préférentiellement, la barre est coudée. Le coude monte vers l'arrière. La cinématique d'escamotage en est alors facilitée. De préférence, le dossier est escamotable vers le haut du véhicule.

Un véhicule est de préférence un véhicule à moteur, avantageusement terrestre. Un véhicule est préférentiellement un fourgon utilitaire.

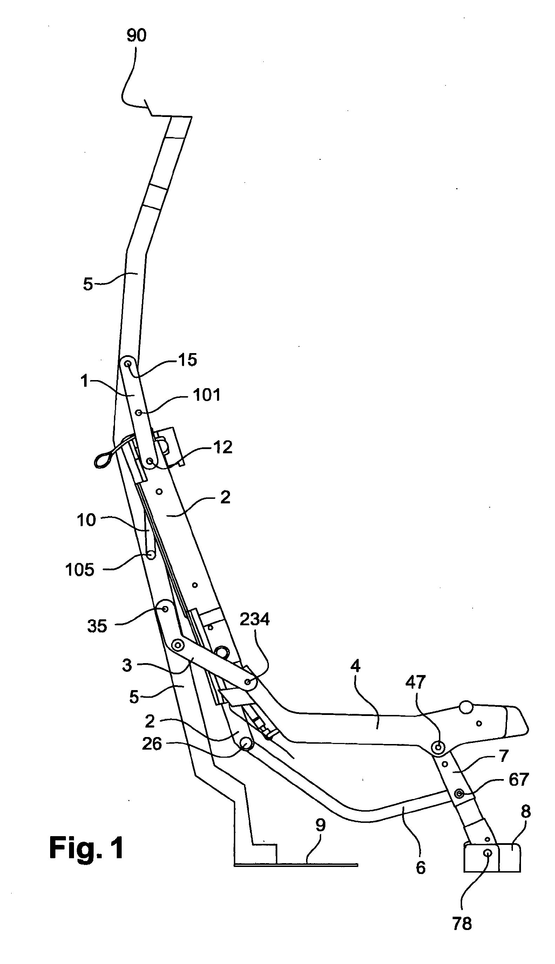

L'invention va maintenant être décrite plus en détail à l'aide des figures ci-après, données à titre d'exemples illustratifs et non limitatifs, où les figures 1 à 6 représentent la cinématique d'escamotage du siège escamotable au travers de ses différentes positions successives :
- la figure 1 représente schématiquement un exemple d'habitacle de véhicule intégrant un siège escamotable selon l'invention, le siège étant non escamoté, en position normale d'utilisation dans laquelle un occupant peut être assis dedans, le dossier du siège étant en position basse, l'assise du siège étant en position dépliée ;

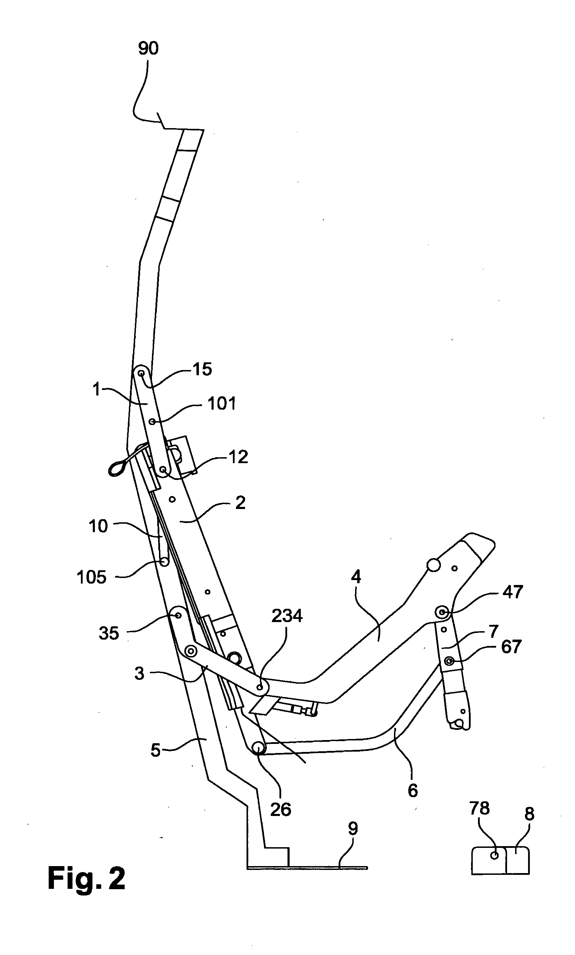

- la figure 2 représente schématiquement un exemple d'habitacle de véhicule intégrant un siège escamotable selon l'invention, le siège étant en cours d'escamotage vers une position d'escamotage partiel, le dossier du siège étant en position basse, l'assise du siège étant en position partiellement repliée ;

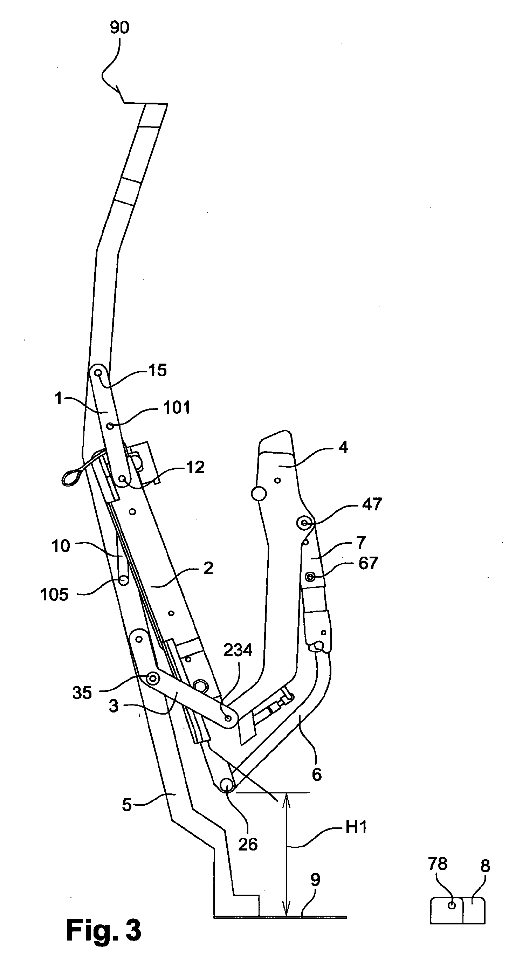

- la figure 3 représente schématiquement un exemple d'habitacle de véhicule intégrant un siège escamotable selon l'invention, le siège étant en position d'escamotage partiel libérant un espace de chargement raisonnable pour une gêne modérée, le dossier du siège étant en position basse, l'assise du siège étant en position repliée contre le dossier ;

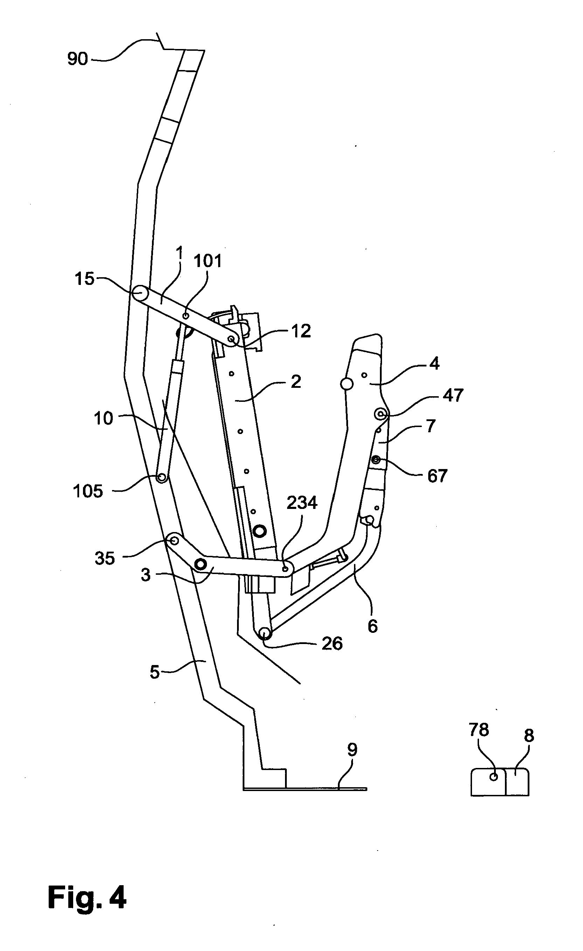

- la figure 4 représente schématiquement un exemple d'habitacle de véhicule intégrant un siège escamotable selon l'invention, le siège étant en cours d'escamotage vers une position d'escamotage complet, le dossier du siège étant en position intermédiaire basse, l'assise du siège étant en position repliée contre le dossier ;

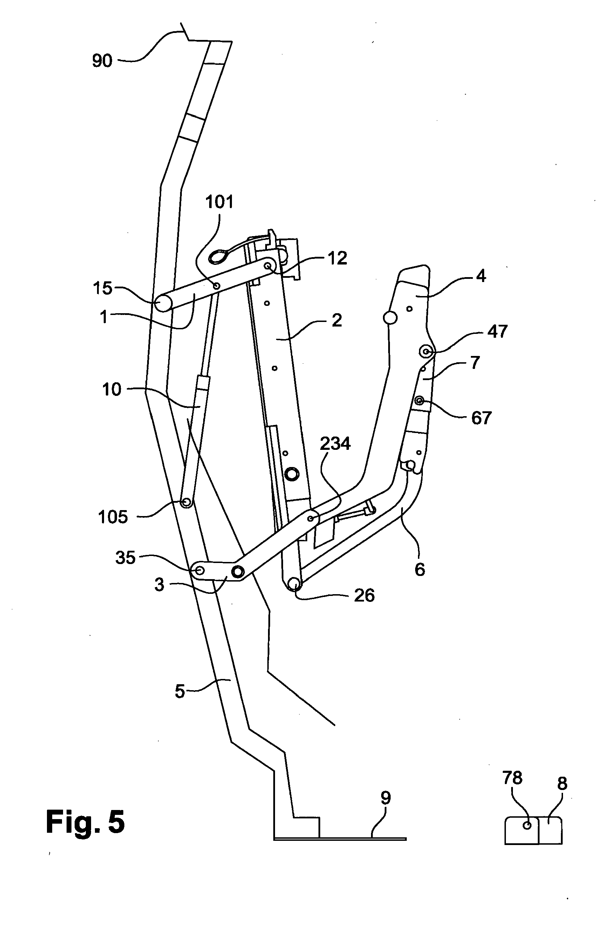

- la figure 5 représente schématiquement un exemple d'habitacle de véhicule intégrant un siège escamotable selon l'invention, le siège étant en cours d'escamotage vers une position d'escamotage complet, le dossier du siège étant en position intermédiaire haute, l'assise du siège étant en position repliée contre le dossier ;

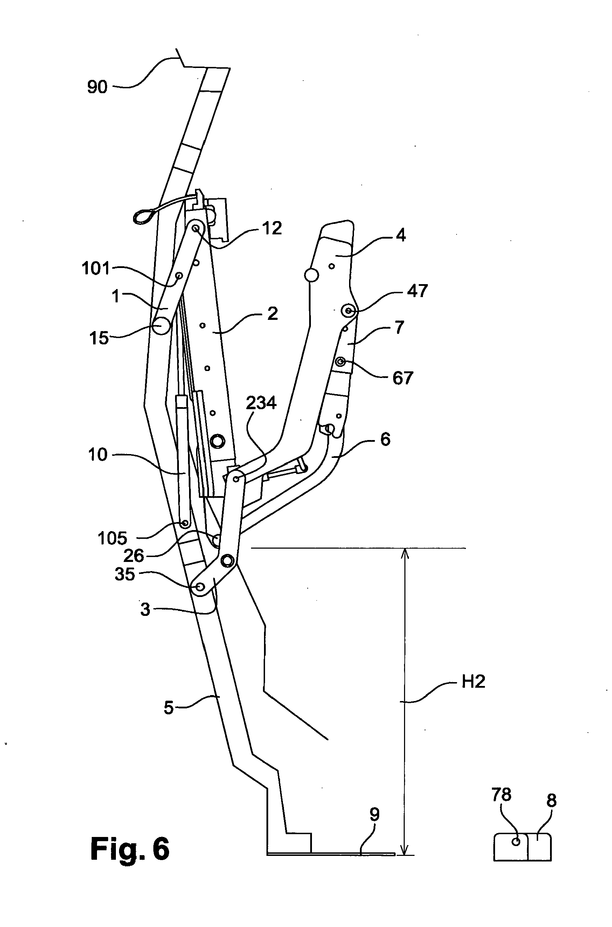

- la figure 6 représente schématiquement un exemple d'habitacle de véhicule intégrant un siège escamotable selon l'invention, le siège étant en position d'escamotage complet libérant un espace de chargement important pour une gêne notable, le dossier du siège étant en position haute, l'assise du siège étant en position repliée contre le dossier.

Les différentes orientations, haut et bas, gauche et droit, sont données aussi bien par rapport au véhicule que par rapport au siège escamotable considéré, car ce sont les mêmes.

Dans l'exemple d'habitacle de véhicule décrit en liaison avec les figures 1 à 6, le siège escamotable est situé dans un poste de conduite intégrant une rangée de trois sièges. Le siège escamotable selon l'invention est un siège passager latéral, situé à droite (pour une conduite à gauche), et séparé du siège conducteur non escamotable et situé à gauche, par un siège passager central.

La figure 1 représente schématiquement un exemple d'habitacle de véhicule intégrant un siège escamotable selon l'invention, le siège étant non escamoté, en position normale d'utilisation dans laquelle un occupant peut être assis dedans, le dossier du siège étant en position basse, l'assise du siège étant en position dépliée. Dans l'habitacle du véhicule intégrant un siège escamotable selon l'invention, se trouvent un plancher 9 d'une part sur lequel repose un ancrage 8 et d'autre part au-dessus duquel s'élève un support 5 pour le siège escamotable. L'ancrage 8 et le support 5 sont tous deux fixes entre eux et par rapport à la structure de l'habitacle du véhicule. Le support 5 relie le plancher 9 au pavillon 90 de l'habitacle du véhicule.

Le siège escamotable comprend une assise 4 articulée par rapport à un dossier 2 autour d'une liaison pivot 234. Le siège escamotable est relié à la structure de l'habitacle du véhicule par l'intermédiaire de plusieurs bielles, au moins une bielle supérieure 1, au moins une bielle inférieure 3, et au moins un pied 7 qui joue le rôle d'une bielle et sur lequel repose l'assise 4 du siège escamotable.

Le haut de dossier 2 est relié au support 5 par l'intermédiaire d'une bielle supérieure 1 située à la droite du siège escamotable ou bien par l'intermédiaire de deux bielles supérieures 1 situées de part et d'autre du siège escamotable. Dans la suite, on considérera qu'il n'y a qu'une seule bielle supérieure 1. Une extrémité de la bielle supérieure 1 est reliée au support 5 par l'intermédiaire d'une liaison pivot 15. Une autre extrémité de la bielle supérieure 1 est reliée au haut de dossier 2 par l'intermédiaire d'une liaison pivot 12.

L'assise 4 est reliée à l'ancrage 8 par l'intermédiaire d'un pied 7 situé à la droite du siège escamotable ou bien par l'intermédiaire de deux pieds 7 situés de part et d'autre du siège escamotable. Dans la suite, on considérera qu'il n'y a qu'un seul pied 7. Une extrémité du pied 7 est reliée à l'ancrage 8 par l'intermédiaire d'une liaison pivot 78. L'autre extrémité du pied 7 est reliée à l'assise 4 par l'intermédiaire d'une liaison pivot 47.

Le dossier 2 et l'assise 4 sont simultanément reliés au support 5 par l'intermédiaire d'une bielle inférieure 3 située à la droite du siège escamotable ou bien par l'intermédiaire de deux bielles inférieures 3 situées de part et d'autre du siège escamotable. Dans la suite, on considérera qu'il n'y a qu'une seule bielle inférieure 3. Une extrémité de la bielle inférieure 3 est reliée au support 5 par l'intermédiaire d'une liaison pivot 35. L'autre extrémité de la bielle inférieure 3 est simultanément reliée au dossier 2 et à l'assise 4 par l'intermédiaire d'une liaison pivot 234. La bielle inférieure 3 est coudée.

Toutes les liaisons pivot sont fixes et permanentes, sauf la liaison pivot 78 qui se désolidarise de l'ancrage 8 dès le début de l'escamotage du siège escamotable, mais qui reste verrouillée au niveau de l'ancrage 8 pour la position normale d'utilisation du siège escamotable, position dans laquelle un occupant peut être assis dans ledit siège, comme sur cette figure 1.

Le siège escamotable comprend aussi une barre coudée 6 qui joue également le rôle d'une bielle en reliant le bas du dossier 2 au milieu du pied 7. Le bas de dossier 2 est relié à la barre coudée 6 par l'intermédiaire d'une liaison pivot 26. Le milieu de pied 7 est relié à la barre coudée 6 par l'intermédiaire d'une liaison pivot 67.

L'habitacle de véhicule comprend encore avantageusement un vérin 10 dont la fonction est d'assister l'utilisateur du véhicule lorsqu'il procède à l'escamotage manuel du siège escamotable. Le vérin 10 relie le support 5 au milieu de la bielle supérieure 1. Le vérin 10 est relié au support 5 par l'intermédiaire d'une liaison pivot 105. Le vérin 10 est relié au milieu de la bielle supérieure 1 par l'intermédiaire d'une liaison pivot 101.

Sur la figure 1, on voit bien qu'il n'est pas possible d'utiliser l'espace sous l'assise 4 comme espace de chargement.

La figure 2 représente schématiquement un exemple d'habitacle de véhicule intégrant un siège escamotable selon l'invention, le siège étant en cours d'escamotage vers une position d'escamotage partiel, le dossier du siège étant en position basse, l'assise du siège étant en position partiellement repliée. Par rapport à la position du siège escamotable représentée sur la figure 1, l'escamotage du siège escamotable a progressé. Le pied 7 s'est désolidarisé de l'ancrage 8 puis s'est écarté de l'ancrage 8. L'assise 4 et la barre coudée 6 se sont relevées.

La figure 3 représente schématiquement un exemple d'habitacle de véhicule intégrant un siège escamotable selon l'invention, le siège étant en position d'escamotage partiel libérant un espace de chargement raisonnable pour une gêne modérée, le dossier du siège étant en position basse, l'assise du siège étant en position repliée contre le dossier. Par rapport à la position du siège escamotable représentée sur la figure 2, l'escamotage du siège escamotable a progressé. Le pied 7 et la barre coudée 6 sont venus se plaquer contre le dessous de l'assise 4. L'assise 4 est venue se replier contre le dossier 2. Au cours des phases suivantes de la cinématique d'escamotage, l'assise 4 va restée repliée contre le dossier 2, et le pied 7 comme la barre coudée 6 vont restés plaqués contre le dessous de l'assise 4. Le siège est en position d'escamotage partiel rendant disponible un espace de chargement qui s'étend sous le siège, de part et d'autre du support 5 d'avant en arrière. La hauteur H1 de chargement est raisonnable. Lors de l'escamotage partiel du siège escamotable, la barre coudée 6 a permis au pied 7 de se plaquer contre l'assise 4.

La figure 4 représente schématiquement un exemple d'habitacle de véhicule intégrant un siège escamotable selon l'invention, le siège étant en cours d'escamotage vers une position d'escamotage complet, le dossier du siège étant en position intermédiaire basse, l'assise du siège étant en position repliée contre le dossier. Par rapport à la position du siège escamotable représentée sur la figure 3, l'escamotage du siège escamotable a progressé. La bielle supérieure 1 et la bielle inférieure 3 se sont relevées. Le dossier 2 a commencé à s'élever. Le vérin 10 a commencé à s'étendre.

La figure 5 représente schématiquement un exemple d'habitacle de véhicule intégrant un siège escamotable selon l'invention, le siège étant en cours d'escamotage vers une position d'escamotage complet, le dossier du siège étant en position intermédiaire haute, l'assise du siège étant en position repliée contre le dossier. Par rapport à la position du siège escamotable représentée sur la figure 4, l'escamotage du siège escamotable a progressé. La bielle supérieure 1 et la bielle inférieure 3 continuent à se relever. Le dossier 2 continue à s'élever. Le vérin 10 continue à s'étendre.

La figure 6 représente schématiquement un exemple d'habitacle de véhicule intégrant un siège escamotable selon l'invention, le siège étant en position d'escamotage complet libérant un espace de chargement important pour une gêne notable, le dossier du siège étant en position haute, l'assise du siège étant en position repliée contre le dossier. Par rapport à la position du siège escamotable représentée sur la figure 5, l'escamotage du siège escamotable a progressé. La bielle supérieure 1 et la bielle inférieure 3 ont achevé de se relever. Le dossier 2 a achevé de s'élever. Le vérin 10 est parvenu à son extension maximale. Le siège est en position d'escamotage complet rendant disponible un espace de chargement qui s'étend sous le siège, de part et d'autre du support 5 d'avant en arrière. La hauteur H2 de chargement est importante et notablement supérieure à la hauteur H1.

Préférentiellement, la hauteur H2 de chargement est au moins une fois et demie plus importante que la hauteur H1. Avantageusement, la hauteur H2 de chargement est au moins deux fois plus importante que la hauteur H1.

L'espace de chargement disponible lors de l'escamotage complet du siège escamotable représenté sur la figure 6 est donc notablement supérieur à l'espace de chargement disponible lors de l'escamotage partiel du siège escamotable représenté sur la figure 3. Lors de l'escamotage complet du siège escamotable, le parallélogramme constitué par la bielle supérieure 1 et la bielle inférieure 3 a permis d'élever l'ensemble constitué par le dossier 2 et l'assise 4 jusqu'à leur position la plus haute.

Pour déplier le siège, la cinématique de dépliement correspond à l'inverse de la cinématique d'escamotage, c'est-à-dire que le siège va parcourir successivement les positions représentées de la figure 6 à la figure 1, c'est-à-dire dans l'ordre décroissant des figures.

## Revendications

1. Véhicule comprenant un siège escamotable comportant un dossier (2) et une assise (4) reposant sur un soubassement (6,7), le soubassement (6,7) étant escamotable contre l'assise (4), l'assise (4) étant escamotable contre le dossier (2), et le dossier (2) étant escamotable, l'escamotage du soubassement (6,7) et l'escamotage de l'assise (4) étant simultanés entre eux et antérieurs à l'escamotage du dossier (2), **caractérisé en ce que** le dossier (2) est relié à la structure (5, 8, 9) du véhicule par l'intermédiaire de deux bielles (1, 3), une bielle supérieure (1) située au-dessus d'une bielle inférieure (3).).

2. Véhicule selon la revendication 1, **caractérisé en ce que** le dossier (2) est escamotable vers le haut du véhicule.

3. Véhicule selon l'une des revendications 1 ou 2, **caractérisé en ce que** la bielle supérieure (1) est rattachée au haut de dossier (2) et **en ce que** la bielle inférieure (3) est rattachée en zone basse de dossier (2).

4. Véhicule selon l'une des revendications 1 à 3, **caractérisé en ce que** la bielle inférieure (3) est rattachée à l'articulation (234) entre le dossier (2) et l'assise (4).

5. Véhicule selon l'une quelconque des revendications précédentes, **caractérisé en ce que** le siège escamotable appartient à une rangée de trois sièges disposés l'un à côté de l'autre.

6. Véhicule selon l'une quelconque des revendications précédentes, **caractérisé en ce que** le véhicule est un véhicule utilitaire avec un plancher de chargement situé derrière le poste de conduite comprenant les sièges du véhicule.

7. Véhicule selon l'une quelconque des revendications précédentes, **caractérisé en ce que** le soubassement (6, 7) comprend plusieurs pieds (7).

8. Véhicule selon la revendication 7, **caractérisé en ce que** chaque pied (7) a son extrémité basse (78) qui peut être verrouillée dans le plancher (8, 9) du véhicule.

9. Véhicule selon la revendication 7 ou 8, **caractérisé en ce que** le soubassement ne comprend que deux pieds (7) qui sont deux pieds (7) latéraux situés en zone avant de l'assise (4), de chaque côté de l'assise (4).

10. Véhicule selon l'une quelconque des revendications 7 à 9, **caractérisé en ce que** le soubassement (6, 7) comprend aussi au moins une barre (6) reliant la zone basse de dossier (2) à une partie non extrême (67) d'un pied (7) du soubassement (6, 7) situé en zone avant de l'assise (4), la barre (6) pouvant pivoter à ses deux extrémités (26, 67).

11. Véhicule selon la revendication 10, **caractérisé en ce que** l'axe de pivotement (26) de la barre (6) en zone basse de dossier (2) est distinct de l'axe de pivotement (234) de l'articulation de l'assise (4) par rapport au dossier (2).

## Patentansprüche

1. Fahrzeug, das einen klappbaren Sitz umfasst, der eine Rückenlehne (2) und eine Sitzfläche (4) umfasst, die auf einer Unterseite (6, 7) ruht, wobei die Unterseite (6, 7) gegen die Sitzfläche (4) klappbar ist, wobei die Sitzfläche (4) gegen die Rückenlehne (2) klappbar ist, und wobei die Rückenlehne (2) klappbar ist, wobei das Klappen der Unterseite (6, 7) und das Klappen der Sitzfläche (4) zueinander gleichzeitig und vor dem Klappen der Rückenlehne (2) sind, **dadurch gekennzeichnet, dass** die Rückenlehne (2) mit dem Aufbau (5, 8, 9) des Fahrzeugs über zwei Pleuel (1, 3), ein oberes Pleuel (1), das oberhalb eines unteren Pleuels (3) liegt, verbunden ist.

2. Fahrzeug nach Anspruch 1, **dadurch gekennzeichnet, dass** die Rückenlehne (2) zur Oberseite des Fahrzeugs klappbar ist.

3. Fahrzeug nach einem der Ansprüche 1 oder 2, **dadurch gekennzeichnet, dass** das obere Pleuel (1) mit der Oberseite der Rückenlehne (2) befestigt ist, und dass das untere Pleuel (3) im unteren Teil der Rückenlehne (2) befestigt ist.

4. Fahrzeug nach einem der Ansprüche 1 bis 3, **dadurch gekennzeichnet, dass** das untere Pleuel (3) an dem Gelenk (234) zwischen der Rückenlehne (2) und der Sitzfläche (4) befestigt ist.

5. Fahrzeug nach einem der vorhergehenden Ansprüche, **dadurch gekennzeichnet, dass** der klappbare Sitz zu einer Reihe von drei Sitzen, die nebeneinander angeordnet sind, gehört.

6. Fahrzeug nach einem der vorhergehenden Ansprüche, **dadurch gekennzeichnet, dass** das Fahrzeug ein Nutzfahrzeug mit einem Ladeboden, der sich hinter dem Fahrerposten befindet, der die Sitze des Fahrzeugs umfasst, ist.

7. Fahrzeug nach einem der vorhergehenden Ansprüche, **dadurch gekennzeichnet, dass** die Unterseite (6, 7) mehrere Füße (7) umfasst.

8. Fahrzeug nach Anspruch 7, **dadurch gekennzeichnet, dass** jeder Fuß (7) sein unteres Ende (78) hat, das in dem Fußboden (8, 9) des Fahrzeugs verriegelt werden kann.

9. Fahrzeug nach Anspruch 7 und 8, **dadurch gekennzeichnet, dass** der untere Teil nur zwei Füße (7) umfasst, die zwei seitliche Füße (7) sind, die in der Zone vor der Sitzfläche (4) auf jeder Seite der Sitzfläche (4) liegen.

10. Fahrzeug nach einem der Ansprüche 7 bis 9, **dadurch gekennzeichnet, dass** der untere Teil (6, 7) auch mindestens eine Stange (6) umfasst, die die untere Zone der Rückenlehne (2) mit einem Teil (67) der nicht das Ende eines Fußes (7) des Unterteils (6, 7) ist, der sich in der Zone vor der Sitzfläche (4) befindet, verbindet, wobei die Stange (6) an ihren beiden Enden (26, 67) schwenken kann.

11. Fahrzeug nach Anspruch 10, **dadurch gekennzeichnet, dass** die Schwenkachse (26) der Stange (6) im unteren Teil der Rückenlehne (2) von der Schwenkachse (234) des Gelenks der Sitzfläche (4) in Bezug auf die Rückenlehne (2) getrennt ist.

## Claims

1. A vehicle including a foldable seat comprising a backrest (2) and a seat portion (4) that rests on a base (6, 7), the base (6, 7) being foldable against the seat portion (4), the seat portion (4) being foldable against the backrest (2), and the backrest (2) being foldable, the folding of the base (6, 7) and the folding of the seat portion (4) being simultaneous and previous to the folding of the backrest (2), **characterized in that** the backrest (2) is connected to the structure (5, 8, 9) of the vehicle by means of two connecting rods (1, 3), an upper connecting rod (1) situated above a lower connecting rod (3).

2. The vehicle according to Claim 1, **characterized in that** the backrest (2) is foldable towards the top of the vehicle.

3. The vehicle according to one of the Claims 1 or 2, **characterized in that** the upper connecting rod (1) is attached to the top of the backrest (2) and **in that** the lower connecting rod (3) is attached at the bottom region of the backrest (2).

4. The vehicle according to one of Claims 1 to 3, **characterized in that** the lower connecting rod (3) is attached to the articulation (234) between the backrest (2) and the seat portion (4).

5. The vehicle according to any one of the preceding claims, **characterized in that** the foldable seat belongs to a row of three seats disposed one next to the other.

6. The vehicle according to any one of the preceding claims, **characterized in that** the vehicle is a utility vehicle with a load floor situated behind the driver's cockpit including the seats of the vehicle.

7. The vehicle according to any one of the preceding claims, **characterized in that** the base (6, 7) includes several feet (7).

8. The vehicle according to Claim 7, **characterized in that** each foot (7) has its bottom end (78) which can be locked in the floor (8, 9) of the vehicle.

9. The vehicle according to Claim 7 or 8, **characterized in that** the base only includes two feet (7) which are two lateral feet (7) situated in the front region of the seat portion (4), on each side of the seat portion (4).

10. The vehicle according to any one of Claims 7 to 9, **characterized in that** the base (6, 7) also includes at least one bar (6) connecting the bottom region of the backrest (2) to a non-extreme portion (67) of a foot (7) of the base (6, 7) situated in the front region of the seat portion (4), the bar (6) being able to pivot at its two ends (26, 67) .

11. The vehicle according to Claim 10, **characterized in that** the pivoting axis (26) of the bar (6) in the bottom region of the backrest (2) is distinct from the pivoting axis (234) of the articulation of the seat portion (4) with respect to the backrest (2).
